# EUROPEAN PATENT APPLICATION

(11) **EP 2 071 546 A1**
(43) Date of publication of application: **17.06.2009**
(21) Application number: 07291512.7
(22) Date of filing: 12.12.2007
(51) Int. Cl.: G09B 29/10, G09B 29/00

(54) **System for determining a geographical location, a related geographical map, and a related resolution server**

(71) Applicant: Alcatel Lucent, 75008 Paris (FR)
(72) Inventor: Lou, Zhe, 2000 Antwerp (BE); Moons, Jan Lode Mia, 2220 Heist-op-den-Berg (BE); Van Broeck, Sigurd, 2980 Zoersel (BE); Trappeniers, Lieven Leopold Albertine, 2200 Herentals (Noorderwijk) (BE); Lauwers, Thais, 2950 Kapellen (BE); Godon, Marc Bruno Frieda, 1840 Londerzeel (BE); Criel, Johan Georges Prosper, 9000 Gent (BE); Claeys, Laurence Annie Hugo Marie, 9000 Gent (BE)
(74) Representative: Narmon, Gisèle Marie Thérèse

(57) **Abstract**

The present invention relates to a system for determining a geographical location and to related devices where the system comprises an auto-ID enabled geographical mapping means that is adapted to represent a plurality of geographical points, each point of said plurality of geographical points of said geographical mapping means being associated with an auto-ID; and an auto-ID reading means that in turn is adapted to read the auto-ID associated to a point of said plurality of geographical points on the geographical map. Then a resolution means is able to resolve a geographical location of said geographical point related to said auto-ID.

## Description

The present invention relates to a System for determining a geographical location, a related geographical map, device and method.

Such a subject is already well known in the art, from for instance web-based tourist information systems wherein information on the location a user is interested in needs to be entered manually. Such a system is disadvantageous in that such manual data entry is error prone. In case a name of a city or object is entered wrongly, no or wrong information will be obtained.

An object of the present invention is to provide a system of the above known type but which is less error prone and at the same time more intuitive.

According to the invention, this object is achieved by the system according to claim 1, the Geographical map according to claim 4, the resolution server according to claim 5.

Indeed, by applying an auto-ID enabled geographical mapping means that is adapted to represent a plurality of points, each point of said plurality of points of said geographical mapping means, representing a physical entity on earth being associated with an auto-ID, by means of an auto-ID reading means, for instance a mobile user device like a mobile phone, reading an auto-ID associated to a discrete point on said geographical map and a resolution means that further is able to resolve a geographical location related to the auto-ID resolving the auto-ID from a list comprising a plurality of auto-ID's each related to a geographical location.

Such a point represents a physical entity on the earth such as a scene, a house or building, resort, a sculpture being a point of interest, a restaurant, hotel or even just a point on earth as a square.

Auto-ID is a tag such as a Radio-frequency identification RFID tag, barcode or semipedia.

The Geographical map may be a map whereon each location or at least a plurality of locations is associated with an Auto-ID that is readable by means of an auto-ID reader.

A further characteristic feature of the present invention is described in claim 2 and claim 7.

By applying a location meta information retrieval means that is adapted to retrieve location meta-information on said point, from a location meta-information server based on said geographical location of said point related to said auto-ID in an accurate way meta-information, such as historical, cultural and social touristic information and media, on a certain location that is identified based on the Auto-ID.

Another characteristic feature of the present invention is described in claim 3 and claim 6.

By means of an association means that is adapted to associate content to geographical location of a geographical point based on an Auto-ID associated to said geographical point the user can associate content such as his own pictures, voice or movies etc link to a geographical location he visited based on the Auto-ID.

Another characteristic feature of the present invention is described in claim 8.

The location meta-information retrieval means is additionally adapted to retrieve said location meta-information on said geographical point based on said point related to said auto-ID and based on a user preference of a user. With an additional set of user preferences the selection of information is more tailored to the information the user needs.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

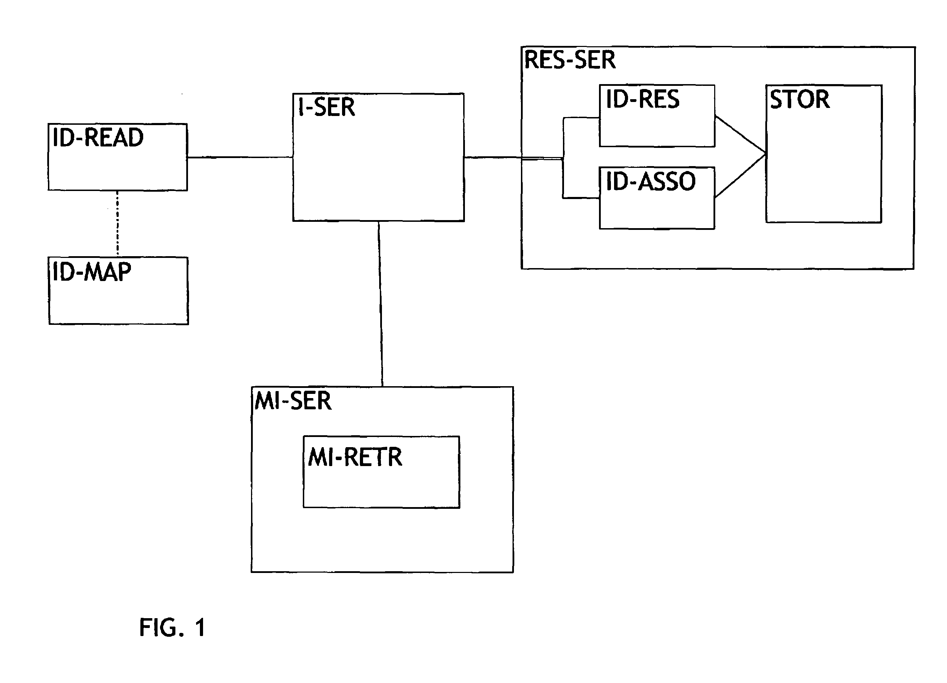

Fig. 1 represents a system for determining a geographical location

In the following paragraphs, referring to the drawing, system for determining a geographical location wherein an implementation of the method according to the present invention is executed.

In the first paragraph the elements of the network in the figure are described, in the second paragraph, the interconnections between all before described Network elements are defined and in a later paragraph the actual execution of the an system for determining a geographical location and related method will be described.

First the system of the present invention comprises an auto-ID enabled geographical mapping means MAP that is adapted to represent a plurality of geographical points, each point of said plurality of geographical points of said geographical mapping means being associated with an auto-ID. This may be a geographical map of some country as known in the art, but has attached to, at least, all relevant locations an auto-ID such as a RFID. This auto-ID alternatively could be a barcode or semipedia.

The system further comprises an auto-ID reading means ID-READ that is adapted to read the auto-ID that is associated to a point of the plurality of geographical points on said geographical map. This auto-ID reading means ID-READ may be a mobile phone with an auto-ID reader such as a RFID reader or a more advanced device like a PDA with communications facilities and at least such an auto-ID reader or barcode reader or semipedia reading means.

Another device is the Resolution server RES_SER that first comprises a resolution means ID-RES for resolving a geographical location of said geographical point related to said auto-ID. This resolution means ID-RES resolves the geographical location coordinates, for instance in latitude and longitude, using the auto-ID being an RFID in this case as an input for resolving. The resolution server RES_SER further contains a storage means STOR for holding information related to an auto-ID such as the location coordinates

The Resolution server RES_SER additionally comprises an association means ID-ASSO that is able to associate content to geographical location of a geographical point based on an Auto-ID associated to said geographical point. This could mean that a user by means of the association means is able to associate content to geographical location of a geographical point based on an Auto-ID that is associated to the geographical point and hence the user can associate content such as his own pictures, voice or movies etc link to a geographical location he visited based on the Auto-ID. The associated content or a link pointing to the content may be associated to the link of auto-ID and location coordinates. The storage STOR hence may contain a list of auto-lD's each with associated geographical location and possibly with a link to content of a user.

The system additionally comprises a location meta-information server MI-SER that in tum comprises a location meta-information retrieval means MI-RETR that is adapted to retrieve location meta-information such as tourist-information, on the geographical point, based on said geographical location of said point related to the auto-ID.

Additionally the meta-information retrieval means MI-RETR may be adapted to retrieve the location meta-information on the geographical point based on said point related to the auto-ID and based on a user preference of a user. By determining meta-information such as tourist information, the retrieval can be based on the location of the point and additionally filtered based on a set of user preferences. The user preferences specify the kind of information the user needs.

The system comprises an intermediate server I-SER that coordinates all interactions between the other devices of the system. This server may be transparent for the other devices of the system.

The auto-lD reading means ID-READ can be couple over a near field communication interface NFC or via barcode scanner interface or camera to the Geographical map. The auto-ID reading means ID-READ further is coupled with the intermediate server I-SER over a communications interface of the auto-ID reading means ID-READ such as GSM, SMS, MMS, email, web services or any other interfaces.

The intermediate server I-SER further is coupled via an input/output to the Resolution server RES_SER. And to the Location meta-information server MI-SER over an input/output communications line.

Both the resolution means ID-RES and association means ID-ASSO have an input/output terminal that is coupled to an input/output terminal of the resolution server RES-SER. Furthermore, both the resolution means ID-RES and association means ID-ASSO are coupled with an input/output to the storage means STOR.

In order to explain the present invention it assumed that for instance a user intends to go visit Paris would like to retrieve information on a trip to Paris. Therefore he owns an auto-ID enabled map of Paris where this map has an RFID attached to each point of interest. Further, he has at his disposal an RFID reader enabled mobile phone. The user then wants to visit the Champs Elysees and touches with his mobile phone ID-READ the Champs-Elysees on the map ID-MAP. The mobile phone sends the detected Auto-ID, i.e. the RFID, to the Intermediate server I-SER. The Intermediate server I-SER then forwards the auto-ID to the resolution server RES-SER that by means of the resolution means ID-RES resolves a geographical location of said geographical point related to the auto-ID related to the touched location, i.e. the Champs-Elysees. This may be performed by looking up the auto-ID in a table maintained by the Storage means STOR. The resolution means ID-RES in response determines the geographical location coordinates of the touched location, expressed in latitude and longitude, and forwards these coordinates to the Intermediate Server I-SER that request the location meta information retrieval means MI-RETR of the Location meta-information server MI-SER to retrieve location meta-information, i.e. tourist information on the touched location, by using the geographical location coordinates as determined by the resolution means ID-RES. The retrieved location meta-information optionally may be filtered using a set of user preferences to obtain a result that better suits the information needs of the user. In order to deal with the retrieving of location meta information additionally based on the user preferences, the intermediate server I-SER in addition to the geographical location coordinates also forwards information with respect to the user profile to the Location meta-information server MI-SER.

The retrieved information then is forwarded, via the intermediate server I-SER to the mobile phone of the user.

Alternatively, the location meta-information the intermediate Server I-SER retrieves may be filtered by the intermediate Server I-SER. The intermediate Server I-SER then forwards the filtered location meta-information towards the mobile phone of the user.

Optionally the user when physically visiting the Champs Elysees may take some pictures of the Champs Elysees and surroundings. The user may afterwards send those pictures together with the auto-ID towards the association means ID-ASSO of the Resolution server RES_SER, via the Intermediate server I-SER. The association means ID-ASSO stores the pictures or a link to a storage device or service such as FLICKR, YOUTUBE where the pictures are stored and can be retrieved from. The pictures may at the same time or in parallel be stored on the storage device or service.

This user additionally wants to plan a travel to Paris with the Auto-ID enabled city map of Paris. By touching with his mobile handset, he gathers lots of interesting historical and cultural information about the Champs-Elysees, Eiffel Tower, Notre-Dame Cathedral, Louvre and so on. He decides to visit most of resorts within 3 days. After touching those points again in the visiting order with input of duration at each scene, the Intermediate server provides him with a detailed and personalized travel plan with information like where to start, how to move from one to another, when/where is the best for lunch.

This travel plan is forwarded to his mobile phone.

The information processing for each of the locations of can be dealt with as the example of the Champs Elysees as described previously.

The user arrives in Paris on time. He receives a message on his mobile handset, from the Intermediated Server I-SER based on his predetermined travel plan, saying, "please take metro nr. 11 to the direction of Eiffel Tower. It will take about 10 minutes". Upon arriving at the Eiffel Tower, the mobile handset starts to introduce it in context of history, architecture and culture. It ends up with "you can take picture/video and associate to the Eiffel Tower by touching the spot on the map". By the auto-guide from the mobile handset, the user finishes his 3-day trip.

When the user arrives at the Eiffel Tower he touched on the map, the mobile handset sends contextual information, e.g. time and location to the Intermediated Server I-SER. In this example scenario, assume the user always sticks to his original plan. Based on the input contextual information and the user/device profile, the Intermediated Server I-SER will send corresponding content back in a multimedia format, e.g. the user prefer to audio information while wandering around the Eiffel Tower.

When the user takes a picture via his mobile handset and touches the Eiffel Tower on the map, the mobile handset sends the Auto-ID and the picture to the Intermediated Server I-SER. Then the Intermediated Server I-SER deposits the picture and sends Auto-ID and the URI of the picture to the Auto-ID resolution server RES-SER. For users who want to store media into a 3^{rd} party domain, e.g. Flickr, YouTube..., the Intermediated Server I-SER will deposit the content via web services first.

The user arrives in Paris 2 hours later than what is planned. He receives a message on his mobile handset, from the Intermediated Server I-SER based on the user's predetermined travel plan, saying, "You are 2 hours late, it is impossible to execute the original plan. You have to modify your original plan." The user touches the Eiffel Tower on the map, two options are provide to him, "reduce visit time" or "cancel". When the "cancel" is clicked, the I-SER deletes the Eiffel Tower from the original plan and re-defines a travel plan accordingly.

First of all there are several message interaction between the mobile handset and the Intermediated Server I-SER (optionally involve the RES-SER) in order to add, modify and delete a resort in the original plan.

After coming back from Paris, he is invited to the birthday party of his brother. He decides to give his brother the Paris map as a present. During the party, his brother touches the map with his mobile handset or a fixed reader connected to a TV, a story is given with the media, e.g. pictures and movies the user took in Paris.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. System for determining a geographical location **CHARACTERISED IN THAT** said system comprises:
a. an auto-ID enabled geographical mapping means (MAP), adapted to represent a plurality of geographical points, each point of said plurality of geographical points of said geographical mapping means being associated with an auto-ID; and
b. an auto-ID reading means (ID-READ), adapted to read said auto-ID associated to a point of said plurality of geographical points on said geographical map; and
c. a resolution means (ID-RES), adapted to resolve a geographical location of said geographical point related to said auto-ID.

2. System according to claim 1, **CHARACTERISED IN THAT** system further comprises:
d. a location meta information retrieval means (MI-RETR), adapted to retrieve location meta-information on said point, from a location meta-information server based on said geographical location of said point related to said auto-ID.

3. System according to claim 2, **CHARACTERISED IN THAT** said system additionally comprises:
e. an association means (ID-ASSO), adapted to associate content to geographical location of a geographical point based on an Auto-ID associated to said geographical point.

4. Geographical map, said geographical map comprising a plurality of geographical points each said point corresponding to a physical entity on earth **CHARACTERISED IN THAT** said geographical map comprises an auto-ID associated to each point of said plurality of geographical points.

5. Resolution server (RES_SER), for use in system according to claim 1, **CHARACTERISED IN THAT** said resolution server (RES_SER) comprises a resolution means (ID-RES), adapted to resolve a geographical location of said geographical point related to said auto-ID.

6. Resolution server (RES_SER) according to claim 5, **CHARACTERISED IN THAT** said Resolution server (RES_SER) system additionally comprises an association means (ID-ASSO), adapted to associate content to geographical location of a geographical point based on an Auto-ID associated to said geographical point.

7. Location meta-information server (MI-SER) for use in a system according to claim 2, **CHARACTERISED IN THAT** said location meta-information server (MI-SER) comprises a location meta information retrieval means (MI-RETR), adapted to retrieve location meta-information on said geographical point, based on said geographical location of said point related to said auto-ID.

8. Location meta-information server (MI-SER) according to claim 7, **CHARACTERISED IN THAT** said location meta information retrieval means (MI-RETR), is additionally adapted to retrieve said location meta-information on said geographical point based on said point related to said auto-ID and based on a user preference of a user.
